# EUROPEAN PATENT APPLICATION

(11) **EP 0 561 516 A1**
(43) Date of publication of application: **22.09.1993**
(21) Application number: 93301374.0
(22) Date of filing: 24.02.1993
(51) Int. Cl.: C08J 3/20, C08K 5/13, C08K 5/00

(54) **Process for stabilizing chlorinated polyethylene against degradation**

(30) Priority: 18.03.1992 GB 9205937
(71) Applicant: THE DOW CHEMICAL COMPANY, Midland, Michigan 48640 (US)
(72) Inventor: Clayfield, Timothy E., W-2160 Stade (DE); Mark, Frank E., W-2160 Stade (DE)
(74) Representative: Raynor, John

(57) **Abstract**

Chlorinated polyethylene is protected against degradation by adding a water-insoluble antioxidant to the chlorinated polyethylene. The antioxidant has a melting point of less than 100 °C. The antioxidant is added after the chlorinated polyethylene has been produced by chlorination of polyethylene in an aqueous suspension and before the produced chlorinated polyethylene is dried.

## Description

The present invention relates to a process for stabilizing chlorinated polyethylene against degradation.

Numerous articles and patents have been published relating to the oxidative and thermal degradation of chlorinated polyethylene during the moulding of chlorinated polyethylene powder or pellets into articles like films, plates etc.

British patent specification 1,539,942 teaches that chlorinated polyethylene is exposed to considerable stress during mixing, grinding and forming processes. This leads to discolouration or other detrimental effects. Therefore, it is suggested to add certain heat stabilizers to the chlorinated polyethylene during processing in order to prevent degradation of the polymer. Numerous stabilizers are generally discussed, such as metallic stabilizers, polyvalent alcohols and phenols and organic phosphites. The stabilizer is mixed with the chlorinated polyethylene while both components are in a dry state and shortly before the polyethylene is processed to articles like sheets.

British patent specification 1,004,306 relates to the stabilization of halogenated polyolefin compositions, such as chlorinated polyethylene, against degradation under conditions of elevated temperatures and/or mechanical working. The British patent teaches that halogenated polyolefins undergo appreciable darkening when heated during thermal fabrication operations and when the fabricated articles are exposed to elevated temperatures for prolonged periods. The British patent suggests to use a stabilizer composition containing a polyhydric alcohol and a phenol and/or a thiophenol. The halogenated polyolefin may be mixed with the stabilizer composition and a plasticizer with or without the aid of volatile solvent and the resulting mixture is milled. Alternatively, the stabilizer components may be incorporated by dissolving them in a solution of the resin. Hower, the latter method is uneconomical due to the large amount of solvents which are necessary for dissolving the normally solid halogenated polyolefin.

East German patent DD-A-157261 relates to self-extinguishing moulding compositions containing a norbornene-ethylene copolymer, a chlorinated polyethylene, hexabromobenzene and a stabilizer (mixture). The East German patent discloses that an amine or a phenolic antioxidant or a sulfur containing compound which decomposes hydroxyperoxides, an organic phosphite or a commercially available lead or calcium stabilizer is used. The compounds are mixed while in a dry state, plastified in an extruder, then processed to granules and moulded to plates.

Chemical Abstracts, vol. 104, no. 8, 1986 Ibonai Masaru et al.: "Adhesive compositions" relates to adhesive compositions containing polychloroprene rubber and chlorinated polyethylene. Low density chlorinated polyethylene was suspended in water and chlorinated at 110°C. The thus obtained chlorinated polyethylene was kneaded with Neoprene W, mixed with magnesium oxide, zinc oxide and antioxidant, roll-kneaded and dissolved in toluene to give a chloroprene rubber solution.

In Polymer Engineering and Science 1975, Vol. 15, No. 4, pages 299-307, "Degradation of Chlorinated Polyethylene - III: Effect of Additives on Dehydrochlorination and Oxygen Absorption by 1. A. Abu-Isa, the degradation of chlorinated polyethylene by dehydrochlorination and oxygen absorption is discussed in depth. The study also discusses the effects of antimony oxide and other metal oxides and metal salts and the effects of antioxidants and dehydrochlorination stabilizers on the degradation of chlorinated polyethylene. Antioxidants which are traditionally used for stabilizing polyolefins, i.e. distearylthiodipropionate, 2,2'-dihydroxy-3,3'-di(alphamethyl cyclohexyl)-5,5'-dimethyl diphenyl methane, polymerized 1,2-dihydro-2,2,4-trimethyl quinoline and sym.dibetanaphthyl-p-phenylene diamine, were incorporated into chlorinated polyethylene by milling and molding at 123 °C. Of the four tested compounds only the first two were effective against dehydrochlorination whereas the latter two were ineffective.

The article "Performance of multifunctional hindered phenolics in crosslinked elastomers" by David P. Raue in ELASTOMERICS, vol. 115, no. 5, May 1983, pages 17-21 suggests the use of hindered phenolic antioxidants for increasing the oven-aging stability of chlorinated polyethylene.

It has now been found that an excellent stabilization of chlorinated polyethylene against degradation is achieved if a certain type of an antioxidant is added to the chlorinated polyethylene shortly after the chlorinated polyethylene has been produced and before it is dried.

Accordingly, one aspect of the present invention is a process for protecting or stabilizing chlorinated polyethylene against degradation which is characterized in that a water-insoluble antioxidant having a melting point of less than 100 °C is added to the chlorinated polyethylene after it has been produced by chlorination of polyethylene in an aqueous suspension and before the produced chlorinated polyethylene is dried.

Another aspect of the present invention is a stabilized chlorinated polyethylene which has been treated according to the process of the present invention.

In contrast to the numerous suggestions in the prior art to add a stabilizer during or shortly before the moulding of chlorinated polyethylene powder or pellets into articles, the present invention relates to an addition of an antioxidant shortly after the production of chlorinated polyethylene and even before the chlorinated polyethylene is dried. The antioxidant is advantageously added to the chlorinated polyethylene while it is still suspended in water whereby the antioxidant is evenly distributed on the surface of the polymer particles. This method allows a more uniform distribution of the antioxidant on the polymer particles than is achieved by dry blending. Furthermore, the antioxidant stabilizes the chlorinated polyethylene against degradation when the chlorinated polyethylene is dried, handled and stored prior to being moulded into articles. It has been found that chlorinated polyethylene is even degraded at room temperature in the presence of oxygen, although at a relatively low rate, if no antioxidant is added.

U.S. patent 2,983,706 relates to the stabilization of brominated copolymers of C₄₋₈-isoolefins and C₄₋₁₄-multiolefins, such as brominated isoprene, butadiene etc. The brominated copolymers are produced by bromination of a solid rubbery copolymer per se or by preparing a solution of such copolymers in an inert liquid organic solvent and adding thereto a brominating agent. The resulting brominated copolymer may be recovered by precipitation with oxygenated hydrocarbons or by conventional drying techniques. Alternatively, the solution of the brominated copolymer may be injected into a vessel containing steam and/or hot water to volatilize the solvent and to form an aqueous slurry of the brominated copolymer. An organic stabilizing compound, such as an aromatic or heterocyclic compound containing at least one hydroxyl group is blended with the brominated copolymer. A portion of the organic stabilizing composition can be added to the brominated copolymer while still dissolved in the organic solvent or when the brominated copolymer is recoved by precipitation or injection into a hot aqueous medium but prior to drying, milling and/or extruding steps. The rest of the organic stabilizing composition can be added later. While the suggested stabilization method may be useful for stabilizing copolymers of C₄₋₈-isoolefins and C₄₋₁₄-multiolefins which have been brominated per se or dissolved in an inert organic solvent, it is evidently not applicably to the stabilization of chlorinated polyethylene which has been produced by chlorination of polyethylene in an aqueous suspension.

The chlorination of polyethylene in an aqueous suspension is well known. For example, it can be carried out as disclosed in U.S. patents 3,454,544 and 4,767,832, the teachings of which are incorporated herein by reference. In order to achieve an optimal and homogeneous chlorination, the polyethylene is generally first chlorinated at a temperature below the melting temperature of polyethylene and then the chlorination is completed in a second stage at a temperature above the melting temperature of the polyethylene. An initial temperature of the polyethylene between 70 and 100 °C, most preferably between 90 and 100 °C, is preferred when the introduction of chlorine into the aqueous suspension starts. While the introduction of chlorine is continued, the temperature of the reaction mixture of the exothermic reaction is preferably allowed to rise to a temperature above the melting temperature of the polyethylene.

The chlorinated polyethylene is suitably prepared by chlorination of finely-divided polyethylene or olefin interpolymers containing at least 80, preferably at least 90, weight percent of ethylene and up to 20, preferably up to 10, weight percent of one or more ethylenically unsaturated monomers which are copolymerizable with ethylene. Useful monomers which are copolymerizable with ethylene are for example non-aromatic, non-cyclic or cycloaliphatic ethylenically unsaturated monomers which have from 3 to 12, preferably from 3 to 8 carbon atoms, such as propylene, 1-butene, 2-butene, 1-octene or 1,7-octadiene; 1,5-cyclopentene or cyclooctadiene; or butadiene. Other useful comonomers are substituted olefins such as acrylic acid, acrylic acid esters and the like; alkenyl aromatic compounds such as styrene and its derivatives; and other known copolymerizable monomers. The chlorinated polyethylene resins may also be prepared by chlorination of the well known linear low density ethylene copolymers. These ethylene copolymers contain minor amounts (generally up to 20 percent, preferably from 5 to 20 percent by weight) of at least one alpha-olefin comonomer selected from the group consisting of propylene, 1-butene, 1-isobutene, 4-methyl-1-pentene, 1-pentene, 1-isopentene, 1-hexene, 1-isohexene, 1-heptene, 1-isoheptene, 1-octene, 1-isooctene, 1-nonene, 1-isononene, 1-decene and 1-isodecene. The amount of comonomers used should generally be enough to result in polymer densities in the low range of 0.90 to 0.94 g/cm³. Furthermore, the chlorinated polyethylene resins may be prepared by chlorination of the ethylene terpolymers disclosed in EP-A-010,428, such as ethylene/1-butene/1-octene or ethylene/propylene/1-octene terpolymers. A preferred starting material for the chlorination process is high density polyethylene (HDPE) which preferably has a density of from 0.940 to 0.980 g/cm³. HDPE includes the linear polymers made at low pressure using a coordination catalyst such as a "Ziegler-type" catalyst. Methods for preparation of such polymers are well known in the art, for example as taught by Schildknecht, Polymer Processes Vol. X (1956) or in Chem. Eng. News, 5 December 1977. Conventionally prepared high density, low density and linear low density polyethylene can generally be used in the chlorination process.

The produced chlorinated polyethylene generally contains from 20 to 50, preferably from 25 to 48 percent, more preferably from 34 to 42 percent chemically combined chlorine. It generally has a density of from 1.05 to 1.35 g/cm³, preferably of from 1.10 to 1.25 g/cm³, more preferably of from 1.12 to 1.20 g/cm³. The chlorinated polyethylene generally has a weight average molecular weight of from 50,000 to 5,000,000, preferably of from 100,000 to 1,000,000 and more preferably of from 200,000 to 500,000. The crystallinity of the chlorinated polyethylene, measured according to differential scanning calorimetry according to method CPE D14-A, is generally less that 30 percent, preferably less than 10 percent, more preferably less than 5 percent. The chlorinated polyethylene preferably has a weight-based average particle size of from 50 to 500 microns, more preferably of from 100 to 350 microns and most preferably from 200 to 300 microns. The chlorinated polyethylene preferably has an acid content of less than 1,000 weight ppm HCl, more preferably of less than 650 weight ppm HCl and most preferably of less than 500 weight ppm HCl and preferably an ash content of from 0.1 to 5 weight percent, more preferably from 0.1 to 2 weight precent.

After the chlorination of polyethylene in an aqeous suspension, the aqueous suspension generally contains the chlorinated polyethylene at an amount of from 2 to 25 percent, preferably from 5 to 20 percent, more preferably from 10 to 18 percent by the total weight of the suspension. If desired, a portion of the aqueous phase can be removed before the antioxidant is added, however the antioxidant is added as long as the chlorinated polyethylene is still wet. The aqueous phase can be removed by known means, for example by filtration, decantation or centrifugation. The residual water content generally is at least 25 percent, preferably at least 100 percent, more preferably at least 200 percent, based upon the weight of the polymer. The chlorinated polyethylene may be mixed with a conventional antiblock additive, such as talc, calcium carbonate or calcium stearate.

Most preferably, the antioxidant is added to the chlorinated polyethylene while it is still suspended in water, preferably without removing any portion of the aqueous phase.

When the antioxidant is added, the temperature of the aqueous suspension or of the wet chlorinated polyethylene generally is from 20 to 100°C, preferably from 50 to 90°C, more preferably from 70 to 85°C. It is desirable that the antioxidant melts upon addition to the chlorinated polyethylene. When the antioxidant melts, a good coating of the particles of chlorinated polyethylene and a homogeneous distribution of the antioxidant on the polymer particles is achieved. By achieving a good coating and a homogeneous distribution, an optimum protection of the chlorinated polyethylene against degradation is obtained. Accordingly, the temperature of the aqueous suspension or of the wet chlorinated polyethylene advantageously is above the melting point of the selected antioxidant.

The antioxidant is generally added at an amount of from 0.001 to 5 percent, preferably of from 0.01 to 1 percent, more preferably of from 0.1 to 0.5 percent, based upon the weight of the chlorinated polyethylene.

Useful antioxidants have a melting point of less than 100 °C. Preferably, the antioxidant has a melting point of less than 90 °C, more preferably less than 85 °C. The antioxidant should be water-insoluble. By the expression "water-insoluble" is meant that the antioxidant has a water-solubility of less than 1 g/l, preferably less than 0.5 g/l, more preferably less than 0.1 g/l and most preferably less than 0.01 g/l.

During the chlorination of polyethylene a substantial amount of hydrogen chloride is produced as a by-product. If the hydrogen ions are not separated from the chlorinated polyethylene prior to addition of the antioxidant, is is advisable to select an antioxidant which is sufficiently stable against hydrolysis. The antioxidant should not be hydrolysed to such an extent before drying of the chlorinated polyethylene that it becomes ineffective. The skilled artisan knows how to select useful antioxidants which have sufficient stability against hydrolysis in an aqueous suspension. Alternatively, hydrogen chloride can be removed from or neutralized in the aqueous suspension of chlorinated polyethylene, for example by washing, treatment with an ion exchanger or neutralization with a basic material before the antioxidant is added. Preferably, the residual hydrogen content is less than 1000 ppm, more preferably less than 650 ppm, most preferably less than 500 ppm by the weight of chlorinated polyethylene.

Particularly useful antioxidants are hindered phenols, hindered bisphenols, hindered thiobisphenols, aromatic amines and dithioesters if they have the desired melting point and if they are water-insoluble as defined above.

Preferred hindered phenols are those of formula I 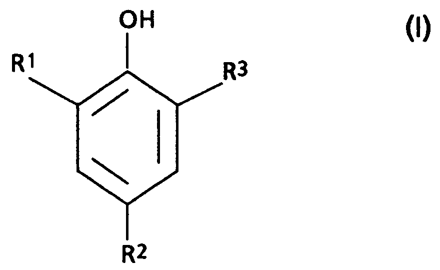
wherein R¹, R² and R³ each independently are a C₁₋₆-alkyl group, such as methyl, ethyl, n-propyl, i-propyl, n-butyl, i-butyl, tert-butyl, a pentyl or a hexyl group.

Generally at least one, preferably at least two groups should provide steric hindrace to the molecule of formula I. Preferably at least one, more preferably at least two of the groups R¹, R² and R³ are i-butyl or tert-butyl. Preferred examples of hindered phenols of formula I are 2,6-di-tert-butyl-4-methylphenol and 2,6-di -tert-butyl-4-sec-butylphenol.

Other preferred hindered phenols are those of formula II 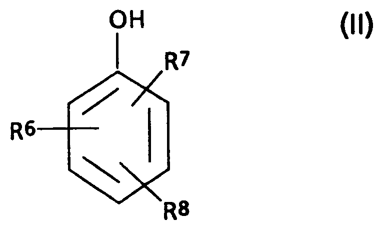
wherein R⁶, R⁷ and R⁸ are arranged in the positions ortho and para to the hydroxyl group, R⁶ is a C₁₋₆-alkyl group, R⁷ is a C₁₋₆-alkyl group or a group containing one or more ester, ether, amide, amine, thioester and/or thioether functionalities and containing up to 24, preferably up to 12 carbon atoms, such as the -CH₂-CH₂-C (O)-O-C₁₈H₃₇, group or the -CH₂-S-C₈H₁₇, group and R⁸ is a group containing one or more ester, ether, amide, amine, thioester and/or thioether functionalities and containing up to 24, preferably up to 12 carbon atoms, such as the -CH₂-CH₂-C(O)-O-C₁₈H₃₇, group or the -CH₂-S-C₈H₁₇ group.

When R⁶ or R⁷ or both are a C₁₋₆-alkyl group, they preferably are methyl, ethyl, n-propyl, i-propyl, n-butyl, i-butyl, tert-butyl, a pentyl or a hexyl group.

Preferred examples of hindered phenols of formula II are octadecyl 3,5-di-tert-butyl-4-hydroxyhydrocinnamate, commercially available as IRGANOX 1076 (trademark), and 2-methyl-4,6-bis((octylthio)-methyl)-phenol, commercially available as IRGANOX 1520 (trademark).

Preferred hindered bisphenols are those of formula III 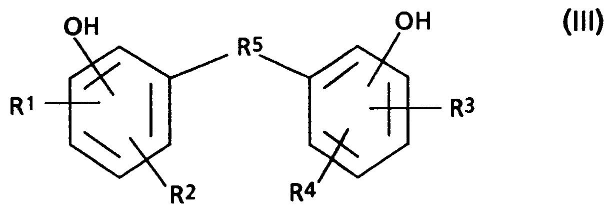
wherein
R¹, R², R³ and R⁴ each independently are a C₁₋₆-alkyl group, such as methyl, ethyl, n-propyl, i-propyl, n-butyl, i-butyl, tert-butyl, a pentyl or a hexyl group and
R⁵ is a straight or branched alkylene group having 1-12, preferably 1-6, more preferably 1-4 carbon atoms, such as methylene, ethylidene or butylidene, or a divalent group containing one or more ester, ether, amide, amine, thioester and/or thioether functionalities and containing up to 18, preferably up to 12 carbon atoms, such as the groups -CH₂-CH₂-C(O)-O-CH₂-CH₂-O-CH₂-CH₂-O-CH₂-CH₂-O-C(O)-CH₂-CH₂- or -CH₂-CH₂-C(O)-NH-CH₂-CH₂-CH₂-CH₂-CH₂-CH₂-NH-C(O)-CH₂-CH₂-.

Generally at least two, preferably four of the groups R¹, R², R³ and R⁴ should provide steric hindrace to the molecule of formula III. Preferably at least one, more preferably at least two of the groups R¹, R², R³ and R⁴ are i-butyl or tert-butyl. Preferred hindered bisphenols are 2,2'-ethylidenebis-(4,6-di-tertbutyl-phenol), 2,2'-methylenebis(4-ethyl-6-tert-butylphenol), 2,2'-methylenebis(4-methyl-6-tert-butylphenol), 4,4'-butylidenebis(6-tert-butyl-m-cresol), 4,4'-methylenebis(2,6-di-tert-butylphenol), N,N'-hexamethylenebis(3,5-di-tert-butyl-4-hydroxyhydrocinnamide, commercially available as IRGANOX 1098 (trademark) and triethylene glycol bis[3-(3-tert-butyl -4-hydroxy-5-methylphenyl)] propionate, commercially available as IRGANOX 245 (trademark).

Preferred hindered thiobisphenols are those of formula IV 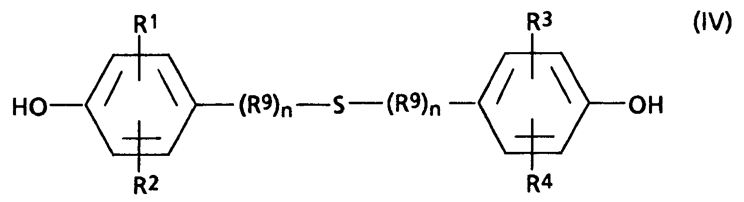
wherein
R¹, R², R³ and R⁴ each independently are a C₁₋₆-alkyl group, such as methyl, ethyl, n-propyl, i-propyl, n-butyl, i-butyl, tert-butyl, a pentyl or a hexyl group and
R⁹ is a straight or branched alkylene group having 1-12, preferably 1-6, more preferably 1-4 carbon atoms, such as methylene, ethylidene or butylidene, or a divalent group containing one or more ester, ether, thioether, amide and/or amine functionalities and containing up to 18, preferably up to 12 carbon atoms, such as the group -CH₂-CH₂-C(O)-O-CH₂-CH₂-CH₂-CH₂-O-C(O)-CH₂-CH₂- and n is 0 or 1.

Generally at least two, preferably four of the groups R¹, R², R³ and R⁴ should provide steric hindrace to the molecule of formula IV. Preferably at least one, more preferably at least two of the groups R¹, R², R³ and R⁴ are i-butyl or tert-butyl. Preferred hindered bisphenols are 4,4'-thiobis(6-tert-butyl-m-cresol) and thiodiethylenebis(3,5-di-tert-butyl-4-hydroxy) hydrocinnamate, commercially available as IRGANOX 1035 (trademark).

Preferred aromatic amines are those of formula V 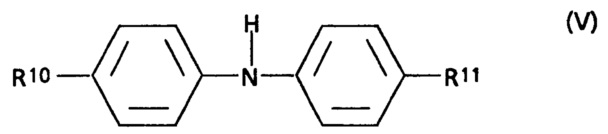
wherein R¹⁰ and R¹¹ each independently are hydrogen, a C₁₋₁₂-alkyl group, preferably a C₈₋₁₂-alkyl group, a phenyl-C₁₋₆-alkyl group, such as the phenyl-ethylidene or phenyl-propylidine group, or a phenyl-amino group. Generally not both groups R¹⁰ and R¹¹ should be hydrogen. Preferred examples of the aromatic amines of formula V are 4,4'-bis(alpha,alpha-dimethylbenzyl)diphenylamine, octylated diphenylamine which is commercially available as VULCANOX OCD, p-oriented styrenated diphenylamine which is commercially available as VULCANOX or N,N'-diphenyl-p-phenylene-diamine.

Other useful aromatic amines are chinolin- or dihydrochinolin-based compounds, such as polymerized 2,2,4-trimethyl-1,2-dihydrochinolin which is commercially available as VULCANOX HS.

Preferred dithioesters are dilauryl thiodipropionate and distearyl thiodipropionate.

Other useful antioxidants are dialkyl dithioethers containing between 18 and 36 carbon atoms, such as di-octadecyl-disulfid.

Generally the wet chlorinated polyethylene or the aqueous suspension of chlorinated polyethylene is agitated when the antioxidant is added. The tip speed of the agitator preferably is from 1 to 3 m/sec. Preferably, agitation is continued until a substantially homogeneous mixture of the antioxidant and the chlorinated polyethylene is achieved. A suitable agitation period is for example from 3 to 60 minutes, preferably from 5 to 30 minutes. After a sufficient agitation period the chlorinated polyethylene is cooled or allowed to cool to ambient temperature. If the chlorinated polyethylene is still suspended in the aqueous medium, it can be separated therefrom in a known manner, for example by centrifugation, filtration, vacuum filtration, expression, spray or freeze drying. The wet or moist composition of chlorinated polyethylene, antioxidant and option known additives can be dried in a known manner, for example by drying in a fluidized bed, a hot air oven, microwave or by spray or freeze drying.

Prior to, during or after drying known additives can be added, such as anti-block agents, such as talc, calcium stearate, calcium carbonate, silica or zeolites, dyes, fillers, such as calcium carbonate or titanium dioxide.

The dried polyethylene is typically obtained in the form of a powder. If desired, it can further be processed by known means, such as extrusion, milling, kneading, moulding or compounding.

The following examples are presented to illustrate the invention and should not be construed as limiting its scope. In the examples, all parts and percentages are by weight, unless otherwise indicated.

### Example 1:

An aqueous slurry of 15 percent of a chlorinated polyethylene (CPE), based on the total weight of the slurry, is put into a glass reactor and heated to a temperature of 71 °C (jacket temperature 75 °C). The slurry is agitated by a combined paddle and turbine stirrer at 200 rpm, so that vertical and radial mixing is obtained.

The CPE contains 35.5 percent of chemically combined chlorine, has a density of 1.18 g/cm³ and has a weight average molecular weight of about 2x10⁵. Its crystallinity is 0.5 percent, measured according to method CPE D14-A.

0.5 percent of an antioxidant, based on the weight of the chlorinated polyethylene, is added to the slurry. Octadecyl 3,5-di-tert-butyl-4-hydroxyhydrocinnamate, commercially available as IRGANOX 1076 (trademark) is used as the antioxidant.

The antioxidant powder is poured into the reactor through an opening in the lid, taking care that the material does not stick to the reactor wall or the stirrer shaft. Any amount of antioxidant seen to have stuck is washed into the slurry with hot slurry liquor.

The mixture is stirred for 45 minutes, before being filtered to express the liquor, and then dried in a fluidised bed dryer to below 0.5 percent volatile material.

In order to test that the antioxidant has actually deposited on the CPE, rather than on the reactor walls, the total organic carbon (TOC) of the slurry is measured, and a glass slide placed in the reactor during the test is investigated for deposition of antioxidant.

The TOC results are good, showing 11.8 ppm before the addition of antioxidant, and 10.0 ppm 60 minutes after addition. The loss of the antioxidant to the slurry liquor is concluded to be negligibly small. Similarly, the glass slide is retrieved from the reactor in an essentially clean state, with only minor drying marks, barely visible under crossed polars in a microscope.

The CPE which has been treated with an antioxidant as indicated above is compared with the same type of CPE which has not been treated with an antioxidant. The CPE is treated in a roll mill at 190 °C to produce a sheet of 3 mm thickness. The yellowness and the tensile properties of the sheet are measured. The yellowness is measured according to ASTM D-1925. The modulus in MPa at 100 percent elongation is measured according to ASTM D-412. The E modulus in MPa and the extension at break in percent are measured according to ASTM D-638. These properties are measured after the CPE has been treated in the roll mill during 1 minute and 15 minutes, respectively.

The weight loss of the CPE in air due to degradation (HCl loss) is measured by thermogranimetric analyzer (TGA) at 200 °C. The results are listed in Table 1:

| **Test Method:Roll Mill190°C** | CPE without Antioxidant | CPE + 0.5% Antioxidant |
|---|---|---|
| Yellowness, ASTM D-1925: | | |
| Yellowness at T = 1 min. | 10.18 | 11.48 |
| Yellowness at T = 15 min. | 18.47 | 16.33 |
| Percent Increase | 81% | 42% |
| Tensile Properties: | | |
| Modulus at 100% T = 1 min. | 0.97 | 0.99 |
| (MPa) T = 15 min. | 0.94 | 1.00 |
| E Modulus T = 1 min. | 2.45 | 2.52 |
| (MPa) T = 15 min. | 2.31 | 2.55 |
| Extension at Break T = 1 min. | 806 | 734 |
| (%) T = 15 min. | 898 | 789 |

| **TGA Testing in Air** **at 200°C** | | |
|---|---|---|
| Max. Rate of Weight Loss (Percent per Minute) | 0.150 | 0.060 |
| Rate of Weight Loss at T = 60 Min. (Percent per Minute) | 0.015 | 0.017 |
| Total Loss in 60 Minutes (Percent) | 1.90 | 1.65 |

The results of Table 1 illustrate that CPE which has been treated according to the method of the present invention better retains its mechanical properties, shows less yellowing and is less subject to degradation when exposed to air, compared to the same type of CPE which has not been treated with an antioxidant. The extension at break is a measure of the molecular weight of a polymer. An increase in the extension at break indicates that the polymer has undergone chain scission (i.e. a degradation) whereby the molecular weight is reduced.

### Example 2:

The thermal degradation (weight loss) of the following samples is measured by TGA at 180 °C (in a nitrogen purge during 60 minutes).

| | |
|---|---|
| CPE slurry of Example 1: (without antioxidant) | 78 ppm/min. |
| CPE slurry of Example 1 which has been heated to 80 °C for 90 minutes. | 85 ppm/min. |
| CPE slurry of Example 1 to which 0.3% triethylene glycol bis [3-tert-butyl-4-hydroxy-5-methylphenyl]propionate (commercially available as IRGANOX 245, trademark) has been added and which has been heated to 80 °C for 90 minutes during addition of the anioxidant. | 75 ppm/min. |

### Example 3:

### Comparison of the Efficiency of Dry-Blending (Comparative Run) and Liquid-Liquid Addition (according to the method of the invention).

In order to illustrate the advantages of liquid-liquid blending over dry blending, a sample of CPE containing 36% chlorine, having a density of 1.18 g/cm³, a weight average molecular weight of 2x10⁵ and a cristallinity of 0.5% is mixed in a food processor with 1% calcium stearate, 1% epoxidized soja bean oil and 0.5% titanium dioxide, based on the weight of the CPE. The mixture is formed into a sheet of 3 mm thickness on a roll mill at 190 °C, and its tensile properties are measured. The extension at break is a measure of the molecular weight of a polymer. The material breaks at 596% extension.

Another sample of the same material is milled for 15 minutes at 190 °C before a sheet of 3 mm thickness is formed. The extension at break is measured to be 895%, indicating that the material has undergone chain scission, reducing the molecular weight.

The antioxidant IRGANOX 1076 (trademark) is added to the mixture as described above at an amount of 0.25% by the weight of the CPE using the food mixer. The resulting mixture is milled for 15 minutes. The extension at break of a sheet of 3 mm thickness, prepared as indicated above, is 740%, showing that the degree of chain scission is reduced by the addition of the antioxidant. (comparative run, but not State of the Art.)

To an aqueous slurry containing 16 % of the CPE, based on the total weight of the slurry, 0.25% IRGANOX 1076 (trademark), by the weight of CPE is added in the manner described in Example 1. The mixture is dried as described in Example 1. 1% calcium stearate, 1% epoxidized soja bean oil and 0.5% titanium dioxide, based on the weight of CPE are added. After 15 minutes milling, the extension at break is 704%, illustrating that the degree of chain scission is substantially lower than in the comparative run.

Example 3 illustrates that the extent of protection against degradation of CPE afforded by an antioxidant, such as IRGANOX 1076 (trademark), is substantially better when added by liquid-liquid addition than by dry blending.

### Example 4:

Example 1 is repeated, however 0.3%, based on the weight of the CPE, of the same antioxidant as in Example 2 is added (IRGANOX 245). The slurry contains 16% CPE. The melting point of IRGANOX 245 is shown by differential scanning calorimetry (DSC) to be 80-81 °C. The jacket temperature of the 6 liter reactor is set to 86 °C, giving a slurry temperature of 81 °C.

The dried CPE/antioxidant sample is tested at 200 °C in a thermogravimetric analyser (TGA) with air as purge. This sample is compared with the same type of CPE to which no antioxidant has been added. For the CPE without antioxidant, the sample weight increases after a short induction time due to the addition of oxygen to the polymer, and this oxygen addition stage is followed by a rapid loss of sample weight due to HCl loss. For the CPE/antioxidant sampler there is no oxidative weight gain, and the weight loss is slower by a factor of 3-4 times.

## Claims

1. A process for stabilizing chlorinated polyethylene against degradation, characterized in that a water-insoluble antioxidant having a melting point of less than 100 °C is added to the chlorinated polyethylene after it has been produced by chlorination of polyethylene;in an aqueous suspension and before the produced chlorinated polyethylene is dried.

2. The process of Claim 1, characterized in that the antioxidant is added to the chlorinated polyethylene while it is still suspended in water.

3. The process of Claim 1 or Claim 2, characterized in that the antioxidant is a hindered phenol, a hindered bisphenol, a hindered thiobisphenol, an aromatic amine or a dithioester.

4. The process of claim 3, characterized in that the antioxidant is a hindered bisphenol of formula III 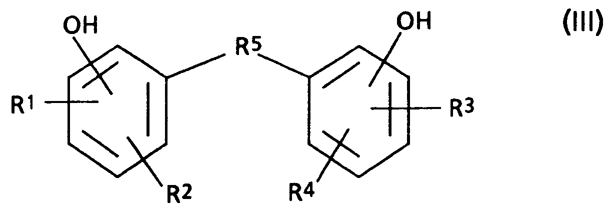 wherein
R¹, R², R³ and R⁴ each independently are a C₁₋₆-alkyl group and
R⁵ is a straight or branched alkylene group having 1-12 carbon atoms or a divalent group containing one or more ester, ether, amide, amine, thioester and/or thioether functionalities and containing up to 18 carbon atoms.

5. The process of Claim 4, characterized in that the antioxidant is triethylene glycol bis[3-(3-tert -butyl-4-hydroxy-5-methylphenyl)] proprionate.

6. The process of Claim 3, characterized in that the antioxidant a hindered phenol of formula II 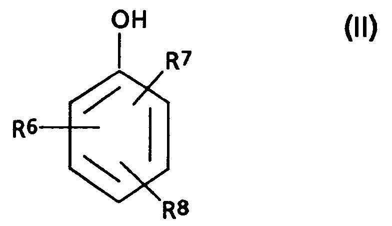 wherein R⁶, R⁷ and R⁸ are arranged in the positions ortho and para to the hydroxyl group,
R⁶ is a C₁₋₆-alkyl group,
R⁷ is a C₁₋₆-alkyl group or a group containing one or more ester, ether, amide, amine, thioester and/or thioether functionalities and containing up to 24 carbon atoms, and R⁸ is a group containing one or more ester, ether, amide, amine, thioester and/or thioether functionalities and containing up to 24 carbon atoms.

7. The process of Claim 6, characterized in that the antioxidant is octadecyl 3,5-di-tert-butyl-4-hydroxy -hydrocinnamate.

8. The process of any one of Claims 1 to 7, characterized in that the antioxidant has a water-solubility of less than 0.5 g/l.

9. The process of any one of claims 1 to 8, characterized in that the antioxidant is added at an amount of from 0.001 to 5 percent, based upon the weight of the chlorinated polyethylene.

10. The process of any one of claims 1 to 9, characterized in that the temperature of the chlorinated polyethylene is kept above the melting point of the antioxidant when the antioxidant is added.
